# DEMANDE DE BREVET EUROPEEN

(11) **EP 4 686 900 A1**
(43) Date de publication de la demande: **04.02.2026**
(21) Numéro de dépôt: 25174429.8
(22) Date de dépôt: 06.05.2025
(51) Int. Cl.: F25J 3/04

(54) **PROCÉDÉ ET APPAREIL DE SÉPARATION D'UN MÉLANGE GAZEUX**

(30) Priorité: 31.07.2024 FR 2408456
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: CHAIX, Jean-Baptiste, 75007 Paris (FR); LECLERC, Mathieu, 75007 Paris (FR); HARBAL, Achraf, 75007 Paris (FR)
(74) Mandataire: Air Liquide

(57) **Abrégé**

Dans un procédé de séparation d'un mélange gazeux, un premier équipement du procédé (B) est chauffé par un premier débit (15, ) d'un premier calorigène et apporte de la chaleur à un premier fluide (D1), le premier débit de calorigène étant chauffé en amont du premier équipement par une source de chaleur (H1, H2), un deuxième équipement du procédé (C, D) chauffe un deuxième fluide (D2) en consommant de la chaleur, la chaleur provenant d'un deuxième débit (7,11) du premier calorigène chauffé par la source de chaleur qui chauffe le deuxième débit du premier calorigène jusqu'à une température intermédiaire inférieure à la deuxième température et par un réchauffeur (H3) en aval de la source qui réchauffe le deuxième débit du premier calorigène, ayant été chauffé par la source de chaleur, depuis la température intermédiaire jusqu'à une deuxième température supérieure à la première température et si la source de chaleur n'est pas disponible, le réchauffeur réchauffe un débit (13) du premier calorigène jusqu'à la première température et le débit réchauffé par le réchauffeur est envoyé à la première température au premier équipement.

## Description

La présente invention est relative à un procédé et à un appareil de séparation d'un mélange gazeux.

En particulier, elle concerne un procédé de séparation d'un mélange gazeux, par exemple contenant du CO2 et au moins une impureté plus légère que le CO2 et/ou au moins une impureté plus lourde que le CO2, dans lequel le mélange est séparé par lavage et/ou distillation et/ou condensation partielle et/ou solidification, par exemple dans un système de colonnes.

Le mélange gazeux peut par exemple être de l'air ou un mélange contenant au moins 30% mol CO2 ou au moins 60% CO2, voire au moins 90% CO2.

Le procédé comprend une étape de réchauffage d'au moins un deux éléments de l'appareil de séparation utilisant un circuit.

Les procédés de séparation de l'air ou de capture de CO2 par voie cryogénique comprennent le plus souvent une compression suivie d'un séchage avant envoi du gaz pré-purifié dans une partie cryogénique. Ce séchage est classiquement réalisé par adsorption: les impuretés sont adsorbées dans une ou plusieurs bouteilles alors que d'autres bouteilles en parallèle sont en régénération par le biais d'un gaz chaud (TSA). La chaleur fournie au gaz de régénération peut provenir de vapeur d'eau ou d'électricité.

Lorsque la vapeur d'eau n'est pas disponible ou trop onéreuse (par exemple lors d'une capture de CO2 sur fumées provenant d'une cimenterie), et/ou quand l'électricité est aussi onéreuse, on peut considérer une intégration thermique où la chaleur dissipée lors de l'étape de compression est utilisée pour chauffer de l'eau qui elle-même réchauffe ensuite le gaz de régénération.

Les procédés de capture de CO2 ont également des besoins de chauffage à plusieurs températures différentes.

L'invention proposée ici permet d'optimiser les coûts de ce type de système et de continuer à chauffer un équipement à la température requise alors qu'une source de chaleur est défaillante.

### Etat de l'art

L'utilisation d'un réchauffeur électrique ou à vapeur d'eau pour la régénération des sécheurs est quelque chose de très classique, étant décrit dans FR-A-2984474 et WO2019/127179.

Pour un procédé de séparation de l'air, l'utilisation d'un réseau d'eau chaude pour chauffer l'azote est connue de EP-A-2873938 et US5846295. Dans EP-A-2873938, la chaleur de compression chauffe l'azote via une circuit d'eau jusqu'à 95°C et un réchauffeur électrique chauffe l'azote de 95 à 140°C.

En variante, l'azote est divisé en deux, une partie étant chauffée par le circuit d'eau et l'autre par le réchauffeur afin d'arriver à la température requise. En dehors de la régénération, la chaleur de compression sert pour chauffer un bâtiment via le circuit d'eau.

US-A-5846295 et FR-A-2830463 décrivent des procédés similaires.

Il est connu d'installer un réchauffeur sur les circuits d'eau chaude afin d'obtenir une température suffisamment élevée lorsqu'une autre source de chaleur contribuant au réchauffage de l'eau n'est pas en opération (par exemple pendant le démarrage ou l'arrêt du reste de l'unité). Ce réchauffeur peut être électrique ou bien utiliser de la vapeur par exemple. Ce réchauffeur peut être à l'arrêt en opération normale.

Il est aussi connu de FR-A-3116586 d'utiliser de l'eau chaude afin de vaporiser des purges cryogéniques provenant du procédé cryogénique avant leur émission ou utilisation dans le procédé.

### Problème résolu par l'invention

L'invention permet de minimiser le nombre d'équipements utilisés pour chauffer de l'eau, en mettant en commun plusieurs fonctionnalités au sein d'un même appareil. Selon une variante, il est question de mettre en commun la fonction de chauffe de l'eau chaude lorsqu'une autre source de chaleur n'est pas en opération et la fonction de surchauffe de l'eau pour un autre équipement, par exemple l'échangeur de chaleur pour chauffer le gaz pour la régénération des sécheurs.

### Description de l'invention

L'invention consiste principalement à utiliser un réchauffeur sur le réseau d'eau chaude, qui permet, selon un premier mode d'opération, le chauffage de l'eau pour un équipement quand une autre source de chaleur n'est pas en opération et, selon un deuxième mode d'opération, la chauffe de l'eau jusqu'à une température pour cet équipement et jusqu'à une autre température pour un autre équipement. Le réchauffeur peut par exemple être un réchauffeur électrique ou un réchauffeur à la vapeur d'eau.

Il y a alors différents mode d'opération possibles pour ce réchauffeur:
- Opération normale: l'eau est réchauffée par sa ou ses sources de chaleur (le compresseur de l'unité par exemple) mais au moins un de ses consommateurs requiert une température plus élevée. Dans ce cas, le réchauffeur fournit de la chaleur uniquement pour au moins un utilisateur nécessitant une température supérieure. Il est alors nécessaire de l'installer sur la branche dédiée à cet au moins un consommateur afin de minimiser la consommation énergétique du système (par rapport à une configuration qui consisterait à chauffer l'ensemble du cycle d'eau chaude).

C'est notamment le cas pour les unités de capture de CO2 ou de séparation de l'air qui nécessitent une source de chaleur à haute température pour la régénération de leurs sécheurs. Il n'est pas nécessaire de chauffer en continu le gaz de régénération des sécheurs (par exemple pendant la phase de refroidissement).

Alors, non seulement le réchauffeur peut être éteint pendant cette phase, mais il est également nécessaire d'évacuer l'excédent de chaleur du système d'eau chaude (ce débit d'eau chaude n'est ni réchauffé dans le réchauffeur ni utilisé pour la régénération des sécheurs). On utilise pour cela un refroidisseur dédié (échangeur thermique atmosphérique ou à l'eau de refroidissement par exemple) connu de l'homme de l'art.
- Démarrage: lorsque l'eau chaude est requise avant le démarrage des sources de chaleur permettant de générer cette eau chaude, le réchauffeur va apporter la chaleur nécessaire. C'est notamment le cas pour les unités de capture de CO2 qui nécessitent le chauffage du gaz traité avant sa compression (en sortie de la colonne de lavage notamment) ; alors que c'est cette même compression qui fournit en opération normale la chaleur nécessaire à chauffer l'eau chaude.
- Arrêt: lorsque la fonction de chauffage est nécessaire lorsque les sources de chaleur sont à l'arrêt, le réchauffeur va chauffer le système d'eau chaude. C'est notamment le cas pour les unités de capture de CO2 qui nécessitent la vaporisation des purges du procédé cryogénique alors que les compresseurs sont arrêtés.

Ainsi, en phase d'arrêt ou de démarrage, lorsque les sources de chaleur sont à l'arrêt, les consommateurs d'eau chaude basse température vont être fournis en eau chaude après le réchauffeur. En fonctionnement normal, l'eau chaude pour ces utilisateurs est prélevée directement avant le réchauffeur. Un jeu de conduites de contournement est requis pour assurer ces deux modes de fonctionnement. Par contre, les consommateurs d'eau chaude à basse température mais qui ne sont en opération que lorsque les sources de chaleur sont aussi en opération sont toujours alimentés en eau chaude avant le réchauffeur. Cela ne nécessite pas de jeu de conduites de contournement additionnel.

Selon un objet de l'invention, il est prévu un procédé de séparation d'un mélange gazeux, par exemple contenant du CO2 et au moins une impureté plus légère que le CO2 et/ou au moins une impureté plus lourde que le CO2, dans lequel le mélange est séparé par lavage et/ou distillation et/ou condensation partielle et/ou solidification dans un système de séparation, par exemple un système de colonnes et
i) Un premier équipement du procédé est chauffé par un premier débit d'un premier calorigène et apporte de la chaleur à un premier fluide provenant du ou destiné au système de séparation, le premier débit de calorigène étant chauffé en amont du premier équipement par une source de chaleur, qui est au moins un refroidisseur d'un compresseur qui comprime au moins une partie du mélange gazeux ou un gaz produit par la séparation du mélange gazeux, qui chauffe le premier débit de calorigène jusqu'à une première température, le premier débit de calorigène passant par une première vanne ouverte et arrivant au premier équipement à la première température
ii) Un deuxième équipement du procédé chauffe, éventuellement ponctuellement, un deuxième fluide provenant du ou destiné au système de séparation en consommant de la chaleur, la chaleur provenant d'un deuxième débit du premier calorigène chauffé par la source de chaleur qui chauffe le deuxième débit du premier calorigène jusqu'à une température intermédiaire inférieure à la deuxième température et par un réchauffeur en aval de la source qui réchauffe le deuxième débit du premier calorigène, ayant été chauffé par la source de chaleur, depuis la température intermédiaire jusqu'à une deuxième température supérieure à la première température et étant empêché de circuler vers le premier équipement par une deuxième vanne fermée et en passant par une troisième vanne ouverte pour arriver au deuxième équipement, et
iii) Si, de préférence seulement si, la source de chaleur n'est pas disponible, le réchauffeur réchauffe un débit du premier calorigène jusqu'à la première température et le débit réchauffé par le réchauffeur est envoyé à la première température au premier équipement, en passant à travers la deuxième vanne ouverte.

Selon d'autres aspects facultatifs :
- un gaz est séparé dans une unité d'adsorption par bascule de temperature ou de pression produisant le mélange gazeux et un gaz de régénération de l'unité d'adsorption constitué par le deuxième fluide provenant du ou destiné au système de séparation est chauffé par le deuxième équipement.
- le premier équipement vaporise au moins un liquide, par exemple un liquide de purge, soutiré d'au moins une colonne du système de colonnes, ce liquide constituant un premier fluide provenant du ou destiné au système de séparation.
- le premier équipement fonctionne pendant l'opération normale du procédé de séparation du mélange gazeux et pendant une opération spéciale du procédé (par exemple le démarrage).
- le deuxième équipement fonctionne ponctuellement pendant l'opération normale du procédé de séparation du mélange gazeux et fonctionne ponctuellement pendant une opération spéciale du procédé (par exemple le démarrage).
- le mélange gazeux est épuré par adsorption dans une unité d'adsorption en amont de la séparation et l'unité d'adsorption est régénéré par le deuxième fluide
- le deuxième équipement fonctionne de manière permanente pendant l'opération normale du procédé de séparation du mélange gazeux et fonctionne de manière permanente pendant une opération spéciale du procédé (par exemple le démarrage).
- le mélange gazeux est épuré en mercure dans une unité d'épuration en mercure et le deuxième fluide est un gaz destiné à l'épuration en mercure du procédé de séparation du mélange gazeux.
- une partie du premier fluide calorigène chauffe un équipement qui fonctionne uniquement en fonctionnement normal du procédé de séparation et pas pendant une opération spéciale par exemple le démarrage et/ou un arrêt
- le compresseur du mélange gazeux fonctionne en fonctionnement normal du procédé de séparation et pas pendant une opération spéciale par exemple le démarrage et/ou un arrêt.
- le mélange gazeux est de l'air.
- le mélange gazeux contient au moins 30% mol CO2 ou au moins 60% CO2, voire au moins 90% CO2.
- au moins une partie du mélange gazeux est comprimée dans le compresseur et ensuite est séparée dans le système de séparation.
- au moins une partie du mélange gazeux est séparé dans la système de séparation à une température inférieure à 0°C, voire inférieure à -40°C.
- au moins une partie d'un gaz produit par le système de séparation est comprimée dans le compresseur.
- au moins une partie d'un liquide produit par le système de séparation est vaporisée pour former un gaz qui est comprimé dans le compresseur.
- le premier calorigène refroidi par le premier et le deuxième équipements est renvoyé à la source de chaleur pour s'y réchauffer.
- le premier calorigène refroidi par le premier et le deuxième équipements est renvoyé à la source de chaleur pour s'y réchauffer après une étape de refroidissement en aval des premier et deuxième équipements.
- le mélange gazeux contient du CO2 et du NOx, la colonne est une colonne de lavage dont le liquide de cuve est enrichi en NOx par rapport au mélange gazeux et le liquide de cuve est vaporisé dans le premier équipement.
- la première température est entre 90 et 120°C et/ou la deuxième température est entre 150 et 170°C.
- la deuxième température est supérieure à la première température d'au moins 30°C, de préférence d'au moins 50°C
- si, de préférence seulement si, la source de chaleur n'est pas disponible, tout le débit réchauffé par le réchauffeur est envoyé à la première température au premier équipement en passant à travers la deuxième vanne ouverte.
- si, de préférence seulement si, la source de chaleur n'est pas disponible, tout le débit réchauffé par le réchauffeur est envoyé à la première température aux premier et deuxième équipements en passant à travers la deuxième vanne ouverte.
- la source de chaleur et/ou le réchauffeur est un élément de chauffage électrique.
- le premier calorigène est de l'eau ou de l'huile.
- la source est un réfrigérant d'un compresseur du mélange gazeux ou d'un gaz séparé par adsorption pour former le mélange gazeux ou d'un gaz produit par la séparation du mélange gazeux.

Selon un objet de l'invention, il est prévu un appareil de séparation d'un mélange gazeux, par exemple contenant du CO2 et au moins une impureté plus légère que le CO2 et/ou au moins une impureté plus lourde que le CO2, comprenant :
a) un système de séparation pour séparer le mélange par condensation partielle et/ou lavage et/ou distillation et/ou solidification
b) un premier équipement relié pour chauffer un premier fluide provenant du ou destiné au système de colonnes
c) un deuxième équipement relié pour chauffer un deuxième fluide provenant du ou destiné au système de colonnes
d) un réchauffeur
e) une source de chaleur qui est au moins un refroidisseur d'un compresseur d'au moins une partie du mélange gazeux ou d'un gaz produit par le système de colonnes
f) une première vanne, une deuxième vanne et une troisième vanne
g) une conduite munie de la première vanne pour envoyer un premier débit (15) d'un premier fluide calorigène chauffé par la source de chaleur depuis la source de chaleur au premier équipement sans passer par le réchauffeur
h) une conduite pour envoyer un deuxième débit du premier fluide calorigène chauffé par la source de chaleur depuis la source de chaleur au réchauffeur et depuis le réchauffeur au deuxième équipement, la conduite de h) étant munie de la troisième vanne en aval du réchauffeur et en amont du deuxième équipement
i) une conduite pour envoyer un débit du premier fluide calorigène depuis le réchauffeur au premier équipement à travers la deuxième vanne reliée en aval du réchauffeur, en amont de la troisième vanne et en amont du premier équipement et
j) des moyens pour déclencher l'envoi du débit du première fluide calorigène depuis le réchauffeur par l'ouverture de la deuxième vanne au premier équipement en fonction d'un signal d'arrêt de fonctionnement de la source.

a) Selon d'autres aspects facultatifs :
   - L'appareil comprend un refroidisseur relié en aval du premier et deuxième équipement pour refroidir les fluides ayant chauffé ces équipements.
   - la première vanne est reliée à la troisième vanne à travers la deuxième vanne.
   - l'appareil comprend des moyens pour envoyer le premier débit depuis le premier équipement à la source et des moyens pour envoyer le deuxième débit depuis le deuxième équipement à la source.
   - l'appareil comprend un refroidisseur relié en amont de la source et en aval du premier équipement et/ou du deuxième équipement pour refroidir le fluide calorigène.
   - l'appareil comprend une unité d'épuration en amont du système de séparation pour épurer le mélange gazeux en eau et éventuellement en CO2 L'invention sera décrite de manière plus détaillée en se référant aux figures où :
      [FIG.1] représente une partie d'un procédé selon l'invention.
      [FIG.2] représente une variante de la [FIG.1]
      [FIG.3] représente une autre partie du procédé selon l'invention des [FIG.1] et [FIG.2].

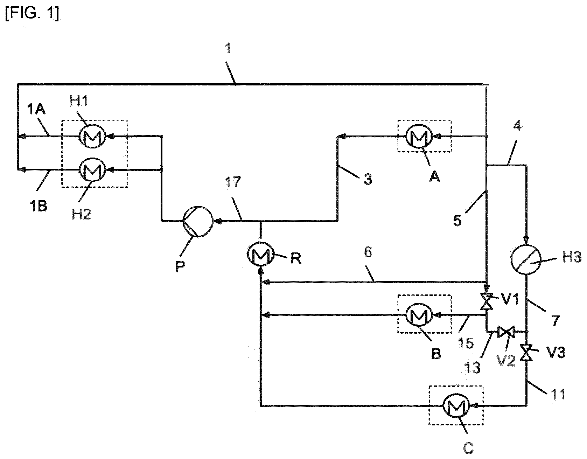

[FIG.1] illustre un circuit de distribution d'eau chauffée opérable selon le procédé de l'invention pour un procédé de séparation d'un mélange gazeux. Le circuit de distribution d'eau pourrait être un circuit de distribution d'un autre caloporteur, tel que de l'huile.

Le circuit comprend au minimum :
- un équipement B à chauffer jusqu'à une première température et qui fonctionne pendant l'opération normale du procédé de séparation du mélange gazeux et pendant une opération spéciale du procédé (par exemple le démarrage ou un arrêt du procédé)
- un équipement C à chauffer ponctuellement jusqu'à une deuxième température plus élevée que la première température et qui fonctionne ponctuellement pendant l'opération normale du procédé de séparation du mélange gazeux et pendant une opération spéciale du procédé (par exemple le démarrage ou un arrêt du procédé).

Le circuit peut également comprendre un équipement A à chauffer jusqu'à la première température et qui fonctionne pendant l'opération normale du procédé de séparation du mélange gazeux mais pas pendant une opération spéciale du procédé (par exemple le démarrage ou l'arrêt du procédé).

Des sources de chaleur H1, H2 peuvent être des refroidisseurs d'un compresseur d'au moins une partie du mélange gazeux à séparer, avant ou après épuration pour enlever de l'eau ou d'un compresseur d'un produit de la séparation gazeux du mélange gazeux. L'eau se chauffe dans au moins une des sources de chaleur H1, H2 produisant un débit 1 d'eau chaude à une première température, par exemple à 110°C. Dans cet exemple, les deux sources de chaleur H1, H2 sont reliées en parallèle.

Au moins une partie du mélange gazeux, pouvant être par exemple de l'air ou un mélange comprenant au moins 30% mol CO2 ou au moins 60% CO2, voire au moins 90% CO2, est comprimé dans un compresseur pouvant être le compresseur ayant les refroidisseurs H1, H2 et est ensuite séparé par lavage et/ou distillation et/ou condensation partielle.

Sinon le compresseur ayant les refroidisseurs H1, H2 peut être un compresseur d'un gaz produit par le lavage et/ou la distillation et/ou la condensation partielle et/ou de la solidification du mélange gazeux, par exemple de l'azote produit par séparation d'air ou séparation d'un mélange gazeux contenant au moins 30% mol de CO2 et de l'azote.

Dans ce cas particulier, l'eau chauffée est distribuée à deux utilisateurs B, C et éventuellement à l'utilisateur A.

L'utilisateur B est un équipement nécessitant de la chaleur basse température pour atteindre la première température (par exemple environ 110°C) en fonctionnement normal mais nécessitant aussi un apport de chaleur, pendant une période où la source de chaleur H1, H2 ne fonctionne pas, pour atteindre la première température.

Par exemple, si la source de chaleur H1, H2 est un compresseur du mélange gazeux, par exemple de l'air, un gaz contenant au moins 30% mol CO2, au moins 60% mol CO2, voire au moins 90% mol CO2 ou un compresseur d'un gaz produit en séparant le mélange gazeux, tel que mentionné ci-dessus, la source de chaleur ne fonctionne pas en phase d'arrêt ou de démarrage. Or pendant ces périodes, l'utilisateur B doit recevoir de l'eau chauffée à la première température.

L'utilisateur B réchauffe un premier fluide provenant de ou destiné au système de séparation, par exemple le système de colonnes.

L'utilisateur B pourrait par exemple être un vaporiseur de purges d'un appareil de séparation par distillation d'air ou d'un mélange gazeux contenant du CO2 et au moins un NOx. Ainsi le premier fluide est un liquide, ici le liquide de purge, provenant du système de séparation.

Il pourrait sinon être un réchauffeur d'un mélange gazeux contenant du CO2 et au moins un autre composant. Ainsi le premier fluide est un gaz qui est le mélange gazeux à séparer destiné du système de séparation.

L'utilisateur C est un équipement nécessitant de la chaleur à une température plus élevée que la première température (par exemple environ 160°C) et qui fonctionne ponctuellement.

Par exemple, l'utilisateur C peut être le réchauffeur de régénération d'un sécheur (par exemple un sécheur de type à adsorption avec bascule de température ou TSA). Le sécheur peut par exemple sécher le mélange gazeux en aval de la compression produisant la chaleur ou sécher le mélange gazeux en amont d'une compression d'une partie du mélange gazeux. La vanne V3 est ouverte en fonctionnement normal et le réchauffeur électrique H3 permet, lors des phases de chauffe de la régénération, d'atteindre la température souhaitée en chauffant de l'eau 7 déjà chauffée par la source de chaleur H1, H2 pour la chauffer de la première température à la deuxième température (par exemple de 110 à 160°C). En dehors de ces phases de chauffe, le réchauffeur H3 est éteint et l'eau chaude à la première température (-110°C) traverse l'utilisateur C sans qu'il n'y ait d'échange de chaleur ou sinon passe par une voie de contournement. Le refroidisseur R permet alors d'évacuer cette chaleur et de ramener l'eau chaude basse température de 110°C à -30°C. Le refroidisseur R permet également d'équilibrer le réseau d'eau chaude en évacuant l'excédent de chaleur produit par les sources de chaleur H1, H2 mais non utilisé par les utilisateurs B, C. L'utilisateur C réchauffe un deuxième fluide provenant de ou destiné au système de séparation, par exemple le système de colonnes. Dans l'exemple, le deuxième fluide est le gaz de régénération provenant du système de séparation et destiné au sécheur.

L'ouverture de la vanne V2 et la fermeture des vannes V1 et V3 permet de guider l'eau chaude chauffée par le réchauffeur électrique H3 vers l'utilisateur B en phase d'arrêt ou de démarrage. La fermeture de V2 et l'ouverture de V1 permet d'utiliser de l'eau chaude basse température en fonctionnement normal.

Les moyens pour déclencher l'envoi du débit du première fluide calorigène depuis le réchauffeur H3 au premier équipement B en fonction d'un signal d'arrêt de fonctionnement de la source H1, H2 ne sont pas illustrés.

Pendant un mode d'opération nominale, une source de chaleur constituée par les réchauffeurs H1, H2 fonctionne et réchauffe un premier calorigène, par exemple de l'eau, 1 jusqu'à une première température (par exemple entre 90 et 120°C, ici 110°C). Ce premier calorigène est entièrement envoyé vers le premier équipement à chauffer B pour lui fournir le premier calorigène à la première température. Le premier calorigène, par exemple cette eau, est refroidie jusqu'à 60°C dans l'équipement B et est renvoyée par une pompe P vers la source de chaleur, c'est-à-dire les réchauffeurs H1, H2. Ce premier mode d'opération peut être considéré comme le mode d'opération nominal. Selon ce premier mode, un réchauffeur H3 ne fonctionne pas, même si le premier calorigène peut circuler à travers le réchauffeur H3 sans être réchauffée. Un refroidisseur R sert à refroidir le premier calorigène venant des équipements B et C pour évacuer la chaleur excédentaire. Ce refroidisseur peut être disposé uniquement pour refroidir le calorigène venant des équipements B et C et sinon pour refroidir le calorigène venant des équipements A, B et C.

Une conduite 6 reliée à la conduite 5 en amont de la vanne V1 est reliée à la conduite 11. Elle permet de renvoyer le premier calorigène à la source pour évacuer un excès de chaleur.

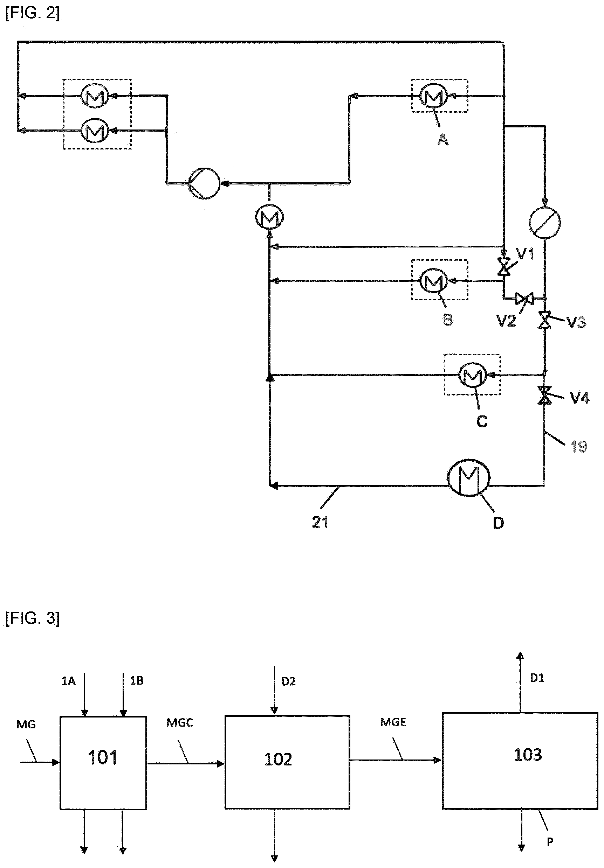

Ensuite, deux modes d'opération spéciale sont prévus pour des cas particuliers : premièrement où la source de chaleur constituée par les réchauffeurs ne fonctionne pas et deuxièmement où de la chaleur est nécessaire ponctuellement pour alimenter au moins un deuxième équipement C à une deuxième température supérieure à la première température. Ces modes d'opération spéciale peuvent correspondre au démarrage du procédé de séparation du mélange gazeux ou son arrêt, quand le compresseur 101 de la [Fig. 3] ne marche pas.

Considérons d'abord, le cas où la source de chaleur constituée par les réchauffeurs H1, H2 ne fonctionne pas (premier mode d'opération spéciale).

Il est évident que l'usage de deux réchauffeurs en parallèle est un cas spécial et que l'invention s'applique quelle que soit la source de chaleur pour le calorigène (un seul réchauffeur, au moins deux réchauffeurs en série ou en parallèle).

Un débit d'un premier calorigène, par exemple de l'eau, 1 circule selon un premier mode d'opération pendant lequel la source de chaleur, donc les réchauffeurs H1, H2, ne fonctionne pas. En l'absence de la source de chaleur H1, H2, le premier calorigène, ici l'eau, est envoyée par la conduite 7 vers le réchauffeur H3 qui chauffe l'eau jusqu'à une première température, ici 110°C. L'équipement B nécessite d'être chauffé même quand la source de chaleur H1, H2 ne fonctionne pas.

L'équipement B pourrait par exemple être un vaporiseur de liquide de purge d'un appareil de séparation par distillation d'air ou distillation d'un mélange gazeux contenant du CO2 et au moins un NOx.

Il pourrait sinon être un réchauffeur d'un mélange gazeux contenant du CO2 et au moins un autre composant. Par exemple l'équipement B peut être un réchauffeur d'un tel mélange CO2 en amont d'un compresseur.

Dans ce cas, la vanne V1 est fermée pour fermer la conduite permettant à l'eau de passer vers l'équipement B sans passer par le réchauffeur H3. La vanne V2 est ouverte de sorte que l'eau à 110°C passe du réchauffeur H3 dans la conduite 13 et ensuite dans la conduite 15 pour chauffer l'équipement B.

L'équipement C et les équipements A ci-présents ne sont pas chauffés.

Le réchauffeur H3 est chauffé électriquement ou par un débit de vapeur d'eau.

Le premier calorigène se refroidit depuis la première température jusqu'à une température inférieure dans l'équipement B et est renvoyée vers le réchauffeur H3 par la pompe en passant dans les réchauffeurs H1, H2 sans être réchauffés. Dans ce cas, le refroidisseur ne marche pas.

Considérons ensuite le cas où un équipement supplémentaire D requiert de l'eau en permanence (mode nominale et mode spéciale) à une température supérieure à la première température, par exemple entre 150 et 170°C. C'est le cas de la Figure 2, qui est une variante de la Figure 1, seuls l'équipement D et la conduite 19, 21 ayant été rajoutés.

Selon un deuxième mode d'opération, la source de chaleur H1, H2 fonctionne et le débit d'eau se trouve à 110°C. Pendant ce mode d'opération, les équipements C et D doit être alimentés en eau à une deuxième température supérieure à la première température et éventuellement l'équipement B doit aussi être alimenté mais en eau à la première température. Une partie du débit 1 est envoyée par la conduite 7 vers le réchauffeur H3 où l'eau est réchauffée jusqu'à 160°C et envoyée à l'équipement C et/ou l'équipement D. L'eau passe à l'équipement C par la vanne V3 ouverte et la conduite 23. L'eau passe à l'équipement D par la vanne V4 ouverte, la conduite 19 et ensuite la conduite 21.

L'équipement C est un équipement nécessitant de la chaleur à une deuxième température plus élevée (-160°C) que celle (première température) atteignable par la source de chaleur H1,H2 seule et qui fonctionne ponctuellement.

Par exemple, l'utilisateur C peut être le réchauffeur d'un gaz de régénération d'un sécheur (TSA). La vanne V3 est ouverte et le réchauffeur H3 permet, lors des phases de chauffe de la régénération, d'atteindre la température souhaitée. L'ouverture de la vanne V2 et la fermeture des vannes V1 et V3 permet de guider l'eau chaude chauffée par le réchauffeur H3 vers cet utilisateur en phase d'arrêt ou de démarrage. La fermeture de V2 et l'ouverture de V1 permet d'utiliser de l'eau chaude basse température en fonctionnement normal.

L'utilisateur D est un échangeur de chaleur permettant de chauffer par exemple un gaz destiné à une épuration en mercure du procédé de séparation du mélange gazeux

Un refroidisseur R peut permettre d'évacuer de la chaleur superflue et de ramener l'eau chaude basse température de 110°C à environ 30°C. Le refroidisseur R permet également d'équilibrer le réseau d'eau chaude en évacuant l'excédent de chaleur produit par la source de chaleur mais non utilisé par les équipements. L'utilisateur A est un équipement nécessitant de la chaleur basse température (-110°C) en fonctionnement normal. Il ne nécessite pas d'apport de chaleur pendant que la source de chaleur ne fonctionne pas. La source de chaleur peut être un compresseur d'un mélange gazeux, par exemple un compresseur d'un procédé de séparation du mélange gazeux par condensation partielle et /ou distillation. Un tel compresseur ne fonctionné pas à certaines périodes, par exemple à l'arrêt ou en phase de démarrage du procédé de séparation. L'utilisateur A n'est pas nécessairement présent.

Cette invention est cumulable avec le concept de vaporisation des purges de la colonne de DeNOx décrit dansFR3147356A3.

[FIG.3] illustre un procédé de séparation d'un mélange gazeux selon l'invention En particulier, elle concerne un procédé de séparation d'un mélange gazeux MG, par exemple de l'air ou un mélange contenant du CO2 et au moins une impureté plus légère que le CO2 et/ou au moins une impureté plus lourde que le CO2, dans lequel l'air ou le mélange est séparé par lavage et/ou distillation dans un système de colonnes.

Au moins une partie du mélange gazeux MG, pouvant être par exemple de l'air ou un mélange comprenant au moins 30% mol CO2 ou au moins 60% CO2, voire au moins 90% CO2, est comprimé dans un compresseur 101 ayant les refroidisseurs H1, H2 et est ensuite séparé par lavage et/ou distillation et/ou condensation partielle. Les débit D1, D1' sont chauffés dans les refroidisseurs H1, H2 et forment le fluide du cycle.

Le mélange gazeux MGC comprimé dans le compresseur 101 est ensuite épuré dans une unité d'adsorption 102 pour enlever l'eau qu'il contient et éventuellement d'autres impuretés pour former un mélange gazeux comprimé et épuré MGCE qui est séparé dans l'unité de séparation 103, par exemple par lavage et/ou par distillation et/ou par solidification et/ou par condensation partielle, produisant au moins un produit P qui peut être comprimé dans un compresseur (non-illustré). Ce compresseur peut servir de source de chaleur pour le cycle de calorigène. L'unité de séparation produit également du liquide de purge D1, provenant de l'unité de séparation 103. Ce liquide est chauffé par l'équipement B des précédentes figures.

Un gaz D2 sert à régénérer l'unité d'adsorption 102 et est chauffé cycliquement par l'équipement C.

L'appareil peut comprendre une unité d'épuration en mercure du mélange gazeux alimenté par un gaz chauffé par l'équipement D, si présent.

Les équipements C, D ne sont pas obligatoirement présents tous les deux. Par exemple l'équipement D peut remplacer l'équipement C dans la [FIG .1].

## Revendications

1. Procédé de séparation d'un mélange gazeux, par exemple contenant du CO2 et au moins une impureté plus légère que le CO2 et/ou au moins une impureté plus lourde que le CO2, dans lequel le mélange est séparé par lavage et/ou distillation et/ou condensation partielle et/ou solidification dans un système de séparation, par exemple un système de colonnes et
i) Un premier équipement du procédé (B) est chauffé par un premier débit (15, ) d'un premier calorigène et apporte de la chaleur à un premier fluide (D1) provenant du ou destiné au système de séparation, le premier débit de calorigène étant chauffé en amont du premier équipement par une source de chaleur (H1, H2), qui est au moins un refroidisseur d'un compresseur (101) qui comprime au moins une partie du mélange gazeux ou un gaz produit par la séparation du mélange gazeux, qui chauffe le premier débit de calorigène jusqu'à une première température, le premier débit de calorigène passant par une première vanne ouverte (V1) et arrivant au premier équipement à la première température
ii) Un deuxième équipement du procédé (C, D) chauffe, éventuellement ponctuellement, un deuxième fluide (D2) provenant du ou destiné au système de séparation en consommant de la chaleur, la chaleur provenant d'un deuxième débit (7,11) du premier calorigène chauffé par la source de chaleur qui chauffe le deuxième débit du premier calorigène jusqu'à une température intermédiaire inférieure à la deuxième température et par un réchauffeur (H3) en aval de la source qui réchauffe le deuxième débit du premier calorigène, ayant été chauffé par la source de chaleur, depuis la température intermédiaire jusqu'à une deuxième température supérieure à la première température et étant empêché de circuler vers le premier équipement par une deuxième vanne fermée (V2) et en passant par une troisième vanne ouverte (V3) pour arriver au deuxième équipement, et
iii) Si, de préférence seulement si, la source de chaleur n'est pas disponible, le réchauffeur réchauffe un débit (13) du premier calorigène jusqu'à la première température et le débit réchauffé par le réchauffeur est envoyé à la première température au premier équipement, en passant à travers la deuxième vanne ouverte.

2. Procédé selon la revendication 1 dans lequel un gaz est séparé dans une unité d'adsorption par bascule de temperature ou de pression (102) produisant le mélange gazeux (MGE) et un gaz de régénération (D2) de l'unité d'adsorption constitué par le deuxième fluide provenant du ou destiné au système de séparation est chauffé par le deuxième équipement (C).

3. Procédé selon une des revendications précédentes dans lequel le premier équipement (B) vaporise au moins un liquide, par exemple un liquide de purge (D1), soutiré d'au moins une colonne du système de colonnes, ce liquide constituant un premier fluide provenant du ou destiné au système de séparation.

4. Procédé selon la revendication 3 dans lequel le mélange gazeux contient du CO2 et du NOx, la colonne est une colonne de lavage dont le liquide de cuve est enrichi en NOx par rapport au mélange gazeux et le liquide de cuve est vaporisé dans le premier équipement (B).

5. Procédé selon une des revendications précédentes dans lequel la première température est entre 90 et 120°C et/ou la deuxième température est entre 150 et 170°C.

6. Procédé selon une des revendications précédentes dans lequel si, de préférence seulement si, la source de chaleur (H1, H2) n'est pas disponible, tout le débit réchauffé par le réchauffeur (H3) est envoyé à la première température au premier équipement (B) en passant à travers la deuxième vanne ouverte.

7. Procédé selon une des revendications précédentes dans lequel la source de chaleur (H1, H2) et/ou le réchauffeur (H3) est un élément de chauffage électrique.

8. Procédé selon l'une des revendications précédentes dans lequel le premier calorigène est de l'eau ou de l'huile

9. Procédé selon l'une des revendications précédentes dans lequel la source (H1, H2) est un réfrigérant d'un compresseur du mélange gazeux ou d'un gaz séparé par adsorption pour former le mélange gazeux ou d'un gaz produit par la séparation du mélange gazeux.

10. Procédé selon l'une des revendications précédentes dans lequel le fluide ayant chauffé le premier équipement et le fluide ayant chauffé le deuxième équipement sont refroidis dans un refroidisseur commun (R).

11. Appareil de séparation d'un mélange gazeux (MG), par exemple contenant du CO2 et au moins une impureté plus légère que le CO2 et/ou au moins une impureté plus lourde que le CO2, comprenant :
a) un système de séparation pour séparer le mélange par condensation partielle et/ou lavage et/ou distillation et/ou solidification
b) un premier équipement (B) relié pour chauffer un premier fluide (D1) provenant du ou destiné au système de colonnes
c) un deuxième équipement (C, D) relié pour chauffer un deuxième fluide (D2) provenant du ou destiné au système de colonnes
d) un réchauffeur (H3)
e) une source de chaleur qui est au moins un refroidisseur (H1, H2) d'un compresseur (101) d'au moins une partie du mélange gazeux ou d'un gaz produit par le système de colonnes
f) une première vanne (V1), une deuxième vanne (V2) et une troisième vanne (V3)
g) une conduite (5) munie de la première vanne (V1) pour envoyer un premier débit (15) d'un premier fluide calorigène chauffé par la source de chaleur depuis la source de chaleur au premier équipement sans passer par le réchauffeur
h) une conduite pour envoyer un deuxième débit (11) du premier fluide calorigène chauffé par la source de chaleur depuis la source de chaleur au réchauffeur et depuis le réchauffeur au deuxième équipement, la conduite de l'étape h) étant munie de la troisième vanne (V3) en aval du réchauffeur et en amont du deuxième équipement
i) une conduite pour envoyer un débit du premier fluide calorigène (13) depuis le réchauffeur au premier équipement à travers la deuxième vanne (V2) reliée en aval du réchauffeur, en amont de la troisième vanne et en amont du premier équipement et
j) des moyens pour déclencher l'envoi du débit du première fluide calorigène depuis le réchauffeur par l'ouverture de la deuxième vanne au premier équipement en fonction d'un signal d'arrêt de fonctionnement de la source.

12. Appareil selon la revendication 11 comprenant un refroidisseur relié en aval du premier et deuxième équipement pour refroidir les fluides ayant chauffé ces équipements.

13. Appareil selon la revendication 11 ou 12 dans lequel la première vanne est reliée à la troisième vanne à travers la deuxième vanne.
